# FASCICULE DE BREVET EUROPEEN

(11) **EP 3 298 651 B1**
(45) Date de publication et mention de la délivrance du brevet: **26.06.2024**
(21) Numéro de dépôt: 16726367.2
(22) Date de dépôt: 13.05.2016
(51) Int. Cl.: H01Q 1/04, H01Q 1/36, H01Q 1/48, H01Q 9/32, G01S 7/03

(54) **SYSTÈME ANTENNAIRE À ONDES DE SURFACE**
OBERFLÄCHENWELLENANTENNENSYSTEM
SURFACE WAVE ANTENNA SYSTEM

(30) Priorité: 18.05.2015 FR 1554426
(43) Date de publication de la demande: 28.03.2018
(73) Titulaire: TDF, 92120 Montrouge (FR); Université de Rennes, 35042 Rennes (FR)
(72) Inventeur: BELLEC, Mathilde, 35520 La Chapelle des Fougeretz (FR); COLOMBEL, Franck, 35160 Monfort-sur-Meu (FR); AVRILLON, Stéphane, 35700 Rennes (FR); PALUD, Sébastien, 35000 Rennes (FR); JEZEQUEL, Pierre-Yves, 35235 Thorigné-Fouillard (FR)
(74) Mandataire: Gevers & Orès
(86) Numéro de dépôt international: PCT/FR2016/051151
(87) Numéro de publication internationale: WO 2016/185124

(56) Documents cités:
- FR-A1- 2 965 978
- US-A- 3 289 208
- US-A- 4 611 214
- US-A- 4 658 266
- US-A1- 2008 266 190
- FIKIORIS G ET AL: "Novel surface-wave antenna", IEE PROCEEDINGS: MICROWAVES, ANTENNAS AND PROPAGATION, IEE, STEVENAGE, HERTS, GB, vol. 143, no. 1, 16 février 1996 (1996-02-16), pages 1-6, XP006006537, ISSN: 1350-2417, DOI: 10.1049/IP-MAP:19960160

## Description

### 1. Domaine technique de l'invention

L'invention concerne un système antennaire. En particulier, l'invention concerne un système antennaire à polarisation verticale et/ou elliptique adapté pour émettre et/ou recevoir des ondes de surface dans une large bande de fréquence incluant notamment tout ou partie des fréquences basses, moyennes et hautes comprises entre 30 kHz environ et 30 MHz environ, soit des ondes kilométriques, hectométrique et décamétriques.

### 2. Arrière-plan technologique

Le document US 3 289 208 A décrit un système antennaire à ondes de surface de fréquences comprises entre 535 kHz et 1605 kHz. Ce système comprend deux antennes électriquement courtes dans le plan vertical et reliées entre elles au moyen d'un blindage dont la longueur est ajustée pour réduire les effets de rayonnement inductif vers le ciel au niveau des extrémités des deux antennes. Un parasite vertical est utilisé pour ajuster la directivité de l'antenne.

L'article de Fikioris G. et al. intitulé "Novel Surface-Wave Antenna" et publié dans IEE Proceedings : Microwaves, Antennas and Propagation, IEE Stevenage, Herts, GB, vol. 143, n. 1, 16 février 1996, pages 1-6, XP006006537, /SSN : 1350-2417, DOi : 10.1049/IP-MAP:19960160 décrit une antenne à onde de surface comprenant une pluralité de dipôles verticaux électriquement courts et disposés selon un cercle. Seulement deux de ces dipôles sont alimentés pour générer un rayonnement horizontal omni-directionnel et à directivité verticale élevée, les autres dipôles jouant de parasites.

Le brevet US 4611214 A décrit un système antennaire configuré pour émettre ou recevoir des ondes d'espace directives dites ondes ionosphériques dans une direction privilégiée formant un angle d'environ 20° avec l'horizon. Ce système comprend une antenne et au moins un élément parasite filaire jouant le rôle de réflecteur.

Actuellement, des pylônes rayonnants de grandes dimensions sont utilisés pour émettre de fortes puissances dans les bandes hectométriques. Ces pylônes présentent l'inconvénient d'être coûteux, de nécessiter un important terrain de sécurité pour leur installation, et d'être peu esthétiques et discrets. Ils ne sont pas optimisés pour une diffusion essentiellement par ondes de surface.

Les antennes utilisant uniquement une onde de surface comme vecteur de propagation sont très peu nombreuses. Les systèmes à ondes de surface actuels utilisent des antennes de type fouet ou biconiques qui sont mal adaptées pour des applications radar.

Les pylônes rayonnants et en général toutes les antennes à polarisation verticale par exemple de type fouet ou biconique génèrent essentiellement un champ d'onde d'espace (aussi appelé rayonnement ionosphérique) et sont coûteux et très peu discrets.

Des solutions ont été proposées pour résoudre ces problèmes. La demande de brevet français FR2965978, déposée par le demandeur, propose une solution permettant de réduire de façon importante l'encombrement vertical de l'antenne, permettant ainsi une réduction des coûts d'implantation et une amélioration de la discrétion de l'antenne.

En outre, l'antenne permet une amélioration de la propagation par ondes de surface et une diminution du rayonnement ionosphérique. Néanmoins, le rayonnement ionosphérique reste toutefois important, notamment pour des angles compris entre ±[20° ; 80°] autour de la normale au plan de sol sur lequel est disposé l'antenne. Ce rayonnement ionosphérique restant peut, dans certaines bandes de fréquences, engendrer des phénomènes d'atténuation (*fading* en anglais), notamment lorsque les ondes de surface et les ondes d'espace interfèrent, au niveau de la surface de la Terre, après propagation dans des milieux et par des chemins différents.

### 3. Objectifs de l'invention

L'invention vise à pallier au moins certains des inconvénients des antennes connus.

En particulier, l'invention vise aussi à fournir, dans au moins un mode de réalisation de l'invention, un système antennaire dont le rayonnement préférentiel est un rayonnement d'ondes de surface.

L'invention vise aussi à fournir, dans au moins un mode de réalisation, un système antennaire dont le rayonnement ionosphérique est diminué.

L'invention vise aussi à fournir, dans au moins un mode de réalisation de l'invention, un système antennaire simple à réaliser.

L'invention vise aussi à fournir, dans au moins un mode de réalisation, un système antennaire discret et dont l'encombrement vertical est faible.

L'invention vise aussi à fournir, dans au moins un mode de réalisation, un système antennaire dont la bande passante peut être facilement modifiée.

L'invention vise aussi à fournir, dans au moins un mode de réalisation, un système antennaire dont l'encombrement surfacique ou horizontal peut être réduit facilement.

### 4. Exposé de l'invention

Pour ce faire , l'invention est définie dans la revendication 1 et concerne un système antennaire à ondes de surface kilométriques, hectométriques ou décamétriques, comprenant :
- au moins une antenne adaptée à émettre et/ou recevoir un rayonnement dans une longueur d'onde de fonctionnement, à polarisation verticale ou elliptique et émettant un rayonnement, ladite au moins une antenne étant reliée à un milieu conducteur présentant une surface sensiblement horizontale,
le système antennaire comprenant en outre :
- au moins un parasite filaire électriquement isolé de chaque antenne de ladite au moins une antenne et
   agencé au voisinage d'au moins une antenne de ladite au moins une antenne de façon à pouvoir rayonner grâce au courant induit par ledit rayonnement de cette au moins une antenne,
   ledit au moins un parasite filaire s'étendant selon une direction formant un angle compris entre -10° et 10° avec la surface du milieu conducteur.

Ladite au moins une antenne est électriquement courte dans le plan vertical, telle qu'elle présente un encombrement vertical inférieur à un quart de la longueur d'onde de fonctionnement, et ledit au moins un parasite filaire a une longueur électrique sélectionnée de sorte que le rayonnement de ladite au moins une antenne et le rayonnement dudit au moins un parasite filaire soient en opposition de phase et quasiment de même amplitude.

On entend par antenne électriquement courte dans le plan vertical une antenne émettant un rayonnement dans une longueur d'onde préférentielle dite longueur d'onde de fonctionnement, et dont l'encombrement vertical est inférieur à un quart de la longueur d'onde de fonctionnement. Si l'antenne émet sur une bande de fréquence, la longueur d'onde de fonctionnement correspond à la longueur d'onde associée à la fréquence centrale de la bande de fréquence.

Un système antennaire selon l'invention permet la réduction du rayonnement ionosphérique d'une antenne grâce à l'utilisation d'un ou plusieurs parasites filaires, de façon à émettre des ondes de surface. Le ou les parasites filaires sont électriquement isolés de chaque antenne, c'est-à-dire qu'ils sont des éléments passifs qui ne sont reliés électriquement à aucune antenne. Notamment, lorsque le système antennaire fonctionne en émission, le ou les parasites filaires ne sont reliés à l'alimentation d'aucune antenne.

Le ou les parasites rayonnent uniquement du fait de leur présence au voisinage d'au moins une antenne rayonnante, par couplage électromagnétique, et ce rayonnement des parasites permet à la fois de réduire le rayonnement ionosphérique du système antennaire, et d'augmenter la directivité du système antennaire dans une direction sensiblement parallèle au plan de sol et sensiblement perpendiculaire au parasite. Le ou les parasites s'étendent dans une direction non verticale, c'est-à-dire que les parasites ne sont pas perpendiculaires à la surface du milieu conducteur. Les caractéristiques du système antennaire concernant la directivité et la réduction du rayonnement ionosphérique dépendent de la résonance du ou des parasites du fait du rayonnement de la ou des antennes, cette résonance dépendant de la longueur du ou des parasites. Il est ainsi possible de régler le diagramme de rayonnement du système antennaire via le choix de la longueur électrique du ou des parasites : le ou les parasites sont dimensionnés de sorte à ce que le rayonnement de la ou des antennes et le rayonnement du ou des parasites soient en opposition de phase et quasiment de la même amplitude afin de réduire fortement le rayonnement dans la direction souhaitée. De préférence, la longueur électrique du ou des parasites est égale à la longueur d'onde de fonctionnement à ±20%.

L'antenne utilisée peut être de différent types, par exemple une antenne fouet raccourcie, ou une antenne dite antenne DAR telle que décrite dans la demande de brevet français FR2965978 citée précédemment. Le ou les parasites filaires améliorent donc les performances de ces antennes. En outre, du fait du faible encombrement vertical du système antennaire, celui-ci est discret, résistant à tout vent, souffle, foudre, séisme ou explosion, et il présente une surface écho radar faible.

Le système antennaire peut être incorporé par exemple dans un système d'émission de forte puissance notamment pour la diffusion de signaux de programmes radiophoniques ou de télévision, ou un système de réception.

De préférence, le parasite filaire s'étend selon une direction sensiblement parallèle à la surface du milieu conducteur. On entend par sensiblement parallèle un angle entre la direction de chaque parasite et la surface du milieu conducteur compris entre -5° et 5°. Le parasite filaire peut aussi être strictement parallèle à la surface du milieu conducteur.

Selon cet aspect de l'invention, la réduction du rayonnement ionosphérique et la directivité de l'antenne sont améliorées.

L'angle entre le parasite et la surface du milieu conducteur est adapté selon la longueur du parasite, de sorte à ce que l'écart entre la partie du parasite la plus éloignée de la surface du milieu conducteur et la partie du parasite la plus proche de la surface du milieu conducteur soit réduit.

Avantageusement, le système antennaire selon l'invention comprend au moins deux parasites filaires s'étendant dans des directions principales différentes l'une de l'autre.

Selon cet aspect de l'invention, les parasites filaires permettent la réduction du rayonnement ionosphérique dans une pluralité de direction de propagation du rayonnement.

Avantageusement et selon l'invention, au moins deux parasites filaires sont électriquement connectés.

Avantageusement, le système antennaire selon l'invention comprend au moins un élément parasitaire vertical s'étendant dans une direction sensiblement perpendiculaire à la surface du milieu conducteur, relié au milieu conducteur, et agencé au voisinage d'au moins une antenne de ladite au moins une antenne de façon à pouvoir rayonner grâce au courant induit par ledit rayonnement de cette au moins une antenne.

Selon cet aspect de l'invention, l'élément parasitaire vertical permet de modifier le rayonnement de l'antenne, notamment sa directivité, et d'augmenter la bande passante du système antennaire. De la même façon que le parasite filaire, l'élément parasitaire vertical rayonne uniquement du fait de sa présence au voisinage d'au moins une antenne rayonnante, par couplage électromagnétique.

Avantageusement et selon l'invention, au moins un élément parasitaire vertical comprend au moins un élément localisé adapté pour modifier la longueur électrique du parasite.

Selon cet aspect de l'invention, les éléments localisés, qui peuvent être des éléments résistifs, capacitifs ou inductifs, permettent de reproduire la résonance RLC du parasite avec une longueur physique de parasite réduite mais une longueur électrique équivalente.

Les éléments localisés peuvent aussi permettre de former sur le ou les éléments parasitaires verticaux des circuits ouverts (ou haute impédance) ou des circuits fermés selon les fréquences de fonctionnement, formant ainsi des pièges de courant. Les éléments localisés sont ainsi adaptés pour créer de multiples résonances à l'aide de pièges de courant.

Avantageusement et selon l'invention, le milieu conducteur comprend un plan de masse, auquel est reliée chaque antenne.

Selon cet aspect de l'invention, le plan de masse permet d'améliorer la conductivité du milieu conducteur si cette conductivité est trop faible.

Avantageusement et selon l'invention, au moins un parasite filaire est relié au milieu conducteur, ou, si le milieu conducteur comprend un plan de masse, au moins un parasite filaire est connecté au plan de masse.

Avantageusement et selon l'invention, au moins un parasite comprend au moins une portion repliée.

Selon cet aspect de l'invention, une portion repliée permet de réduire l'encombrement du parasite et donc du système antennaire, pour une même longueur électrique du parasite.

Une portion repliée peut aussi permettre, dans certaines configurations, d'augmenter la bande passante du parasite afin d'obtenir des diagrammes de rayonnement optimisés sur une bande de fréquences plus importante.

Avantageusement et selon l'invention, au moins un parasite comprend au moins un élément localisé.

Selon cet aspect de l'invention, les éléments localisés, qui peuvent être des éléments résistifs, capacitifs ou inductifs, peuvent permettre de reproduire la résonance RLC du parasite avec une longueur physique de parasite réduite mais une longueur électrique équivalente. Les éléments localisés sont ainsi adaptés pour modifier la longueur électrique du parasite.

Les éléments localisés peuvent aussi permettre de former sur le ou les parasites des circuits ouverts (ou haute impédance) ou des circuits fermés selon les fréquences de fonctionnement, formant ainsi des pièges de courant. Les éléments localisés sont ainsi adaptés pour créer de multiples résonances à l'aide de pièges de courant.

Avantageusement, le système antennaire selon l'invention comprend une pluralité de parasites filaires reliés de sorte à former un parasite surfacique ou un parasite volumique.

Selon cet aspect de l'invention, l'utilisation de plusieurs parasites filaires pour former un parasite surfacique ou volumique permet d'augmenter la largeur de bande passante du système antennaire.

L'invention concerne également un système antennaire caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique selon un plan xOz d'un système antennaire selon un premier mode de réalisation de l'invention,
- la figure 2 est un diagramme de rayonnement selon un plan xOz d'un système antennaire selon le premier mode de réalisation de l'invention,
- la figure 3 est une vue schématique selon un plan xOz d'un système antennaire selon un deuxième mode de réalisation de l'invention,
- la figure 4 est une vue schématique selon un plan yOz d'un système antennaire selon un troisième mode de réalisation de l'invention,
- la figure 5 est une vue schématique en perspective d'un système antennaire selon le troisième mode de réalisation de l'invention,
- la figure 6 est une vue schématique selon un plan xOz d'un système antennaire selon un quatrième mode de réalisation de l'invention,
- la figure 7 est une vue schématique selon un plan xOz d'un système antennaire selon un cinquième mode de réalisation de l'invention,
- la figure 8 est un diagramme de rayonnement selon un plan xOz d'un système antennaire selon le cinquième mode de réalisation de l'invention,
- la figure 9 est une vue schématique selon un plan xOz d'un système antennaire selon un sixième mode de réalisation de l'invention,
- la figure 10 est une vue schématique selon un plan xOz d'un système antennaire selon un septième mode de réalisation de l'invention,
- la figure 11 est une vue schématique selon un plan xOz d'un système antennaire selon un huitième mode de réalisation de l'invention,
- la figure 12 est une vue schématique en perspective d'un système antennaire selon un neuvième mode de réalisation de l'invention,
- la figure 13 est un diagramme de rayonnement selon un plan xOz d'un système antennaire selon le neuvième mode de réalisation de l'invention,
- la figure 14 est un diagramme de rayonnement selon un plan xOy d'un système antennaire selon le neuvième mode de réalisation de l'invention,
- les figures 15a, 15b, 15c, 15d, 15e, 15f, 15g, 15h sont des vues schématiques selon un plan xOy de parasites filaires selon différents modes de réalisation de l'invention,
- les figures 16a, 16b, 16c, 16d sont des vues schématiques selon un plan xOy de parasites surfaciques selon différents modes de réalisation de l'invention,
- les figures 17a, 17b et 17c sont des vues schématiques selon un plan xOy de parasites volumiques selon différents modes de réalisation de l'invention,
- les figures 18a et 18b sont des vues schématiques selon un plan x0y de parasites filaires ou surfaciques comprenant des éléments localisés selon un mode de réalisation de l'invention,
- les figures 19a, 19b, 19c, 19d sont des vues schématiques en perspective de systèmes antennaires comprenant une antenne DAR et un parasite filaire selon différents mode de réalisation de l'invention,
- la figure 20 représente un diagramme de rayonnement selon un plan xOz d'un système antennaire selon le mode de réalisation de l'invention de la figure 19a,

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

Un repère orthogonal Oxyz est utilisé sur chaque figure représentant des systèmes antennaires selon les différents modes de réalisation de l'invention.

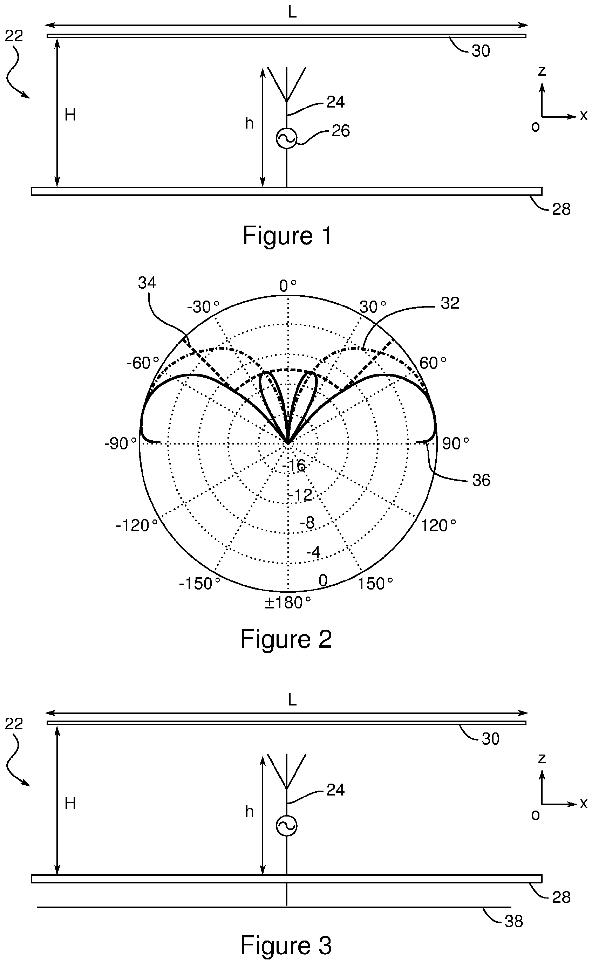

La figure 1 représente schématiquement selon un plan xOz un système 22 antennaire selon un premier mode de réalisation de l'invention.

Le système 22 antennaire comprend une antenne 24 électriquement courte dans le plan vertical, c'est-à-dire dont la hauteur h est inférieure à un quart de la longueur d'onde λ₀ de fonctionnement de l'antenne 24. De préférence, la hauteur h de l'antenne 24 est comprise entre λ₀/200 et λ₀/5. L'antenne 24 peut être par exemple une antenne fouet, ou une antenne telle que décrite dans la demande de brevet français FR2965978, déposée par le demandeur, appelée par la suite antenne DAR. L'antenne est alimentée par un générateur 26, et émet ainsi un rayonnement, de polarisation verticale ou elliptique, d'ondes kilométriques, hectométriques ou décamétriques, c'est-à-dire de fréquence de fonctionnement entre 30 kHz et 30 MHz. L'antenne 24 est reliée à un milieu conducteur 28, présentant une surface sensiblement horizontale, c'est-à-dire sensiblement parallèle au plan x0y du repère orthogonal Oxyz. Le milieu 28 conducteur est un milieu conducteur imparfait, par exemple un sol (en terre, sable, etc.) ou de l'eau (mer, marais salant, lac, etc.).

Le système 22 antennaire comprend en outre un parasite 30 filaire s'étendant selon une direction sensiblement parallèle à la surface du milieu 28 conducteur, ici parallèle à l'axe Ox, et à une hauteur H au dessus du milieu 28 conducteur. La hauteur H est généralement comprise entre λ₀/200 et λ₀/2. Toutefois, plus la hauteur H est faible, plus le système 22 antennaire sera discret et intégré dans le paysage où il se situe. Le parasite 30 filaire est ici linéaire et prend la forme par exemple d'un fil (monobrin ou multibrins) ou d'un tube conducteur à section cylindrique ou carrée. Le parasite 30 est soutenu par au moins un poteau vertical isolant (non représenté), de préférence une pluralité de poteaux verticaux isolants (non représentés) répartis de façon régulière le long du parasite 30, fixés dans le milieu 28 conducteur si sa composition et profondeur s'y prête, ou flottant sur le milieu 28 conducteur si celui-ci est composé d'eau.

Le parasite 30 est électriquement isolé de l'antenne et est agencé au voisinage de l'antenne 24 de façon à pouvoir rayonner grâce au courant induit par le rayonnement de l'antenne 24. Le parasite 30 est de longueur L et dimensionné de sorte à ce que le rayonnement de l'antenne 24 et le rayonnement du parasite 30 soient en opposition de phase et quasiment de la même amplitude afin de réduire fortement le rayonnement dans la direction souhaitée. De préférence, comme représenté, le parasite 30 est centré sur l'antenne 24, l'antenne 24 se trouvant ainsi au niveau du milieu du parasite 30.

Selon d'autres modes de réalisation, le parasite 30 peut être disposé de manière quelconque au voisinage de l'antenne 24 du moment qu'il peut rayonner grâce au courant induit par le rayonnement de l'antenne 24. La longueur L du parasite 30 est donc adaptée en fonction de sa disposition par rapport à l'antenne 24, et varie généralement entre 0,9 λ₀ et plusieurs λ₀. Par exemple, dans un mode de réalisation où l'antenne 24 est une antenne DAR dans laquelle h = 0.03λ₀, le parasite 30 a par exemple pour longueur L = λ₀ et est disposé à une hauteur H =0.033λ₀.

Le système 22 antennaire obtenu est adapté à l'émission d'un rayonnement en ondes kilométriques, hectométriques ou décamétriques. La discontinuité entre l'air et le milieu 28 conducteur imparfait favorise la propagation d'une onde de sol omnidirectionnelle ou directionnelle appelée onde de surface. L'antenne 24 du système 22 antennaire peut être à l'origine une antenne destinée à émettre des ondes de surface, comme par exemple l'antenne DAR, auquel cas l'ajout du parasite 30 pour former le système 22 antennaire entraîne une amélioration des performances de l'antenne. L'antenne 24 du système peut aussi ne pas être à l'origine destinée à émettre des ondes de surface, auquel cas l'ajout du parasite 30 permet d'utiliser pour émettre des ondes de surface une antenne qui n'était originellement pas adaptée à cette fonction. Le système antennaire peut aussi fonctionner en réception de signal.

Ce premier mode de réalisation est le plus simple des modes de réalisation de l'invention. Les modes de réalisations présentés par la suite sont des améliorations de ce premier mode de réalisation, et les caractéristiques déjà décrites pour un mode de réalisation ne seront pas décrites à nouveau pour un mode de réalisation comprenant ces mêmes caractéristiques.

La figure 2 représente un diagramme de rayonnement selon le plan xOz du système antennaire selon le premier mode de réalisation de l'invention.

Le diagramme comprend trois courbes : une première courbe 32 représente le rayonnement d'une antenne DAR classique, une deuxième courbe 34 représente un gabarit délimitant une zone de rayonnement ionosphérique dans laquelle on ne souhaite pas que le système antennaire rayonne, et une troisième courbe 36 représentant le rayonnement du système antennaire selon le premier mode de réalisation de l'invention.

La zone définie par le gabarit indique qu'entre -45° et 45°, le rayonnement du système antennaire ne doit pas dépasser -10 dB. On constate que l'antenne DAR rayonne dans la zone délimitée par le gabarit et ne répond donc pas aux contraintes de limitation du rayonnement ionosphérique. Le système antennaire, notamment du fait de l'ajout des parasites, permet d'obtenir un rayonnement d'ondes de surfaces, proches du plan horizontal xOy représenté par l'axe (-90° ; 90°) du diagramme. En outre, le rayonnement ionosphérique de l'antenne est réduit, et aucun rayonnement ne dépasse les -10 dB dans un angle compris entre -45° et 45°, respectant ainsi les contraintes du gabarit. Ces rayonnements dont l'amplitude est inférieure de 10 dB relativement au maximum de rayonnement sont appelés des nuls de rayonnement.

La figure 3 représente schématiquement selon un plan xOz un système 22 antennaire selon un deuxième mode de réalisation de l'invention.

Le milieu 28 conducteur a une conductivité électrique qui varie en fonction de sa composition. Par exemple, la mer, les marais salants ou les lacs salés ont une forte conductivité électrique, et la terre et le sable ont une faible conductivité électrique. Si la conductivité électrique est trop faible, c'est-à-dire inférieure à 1 S/m, le système 22 antennaire est complété, comme dans ce deuxième mode de réalisation, par un plan 38 de masse, relié à l'antenne 24, et enfoui en dessous ou à la surface du milieu 28 conducteur. Le plan 38 de masse peut être formé d'une plaque, ou d'un ensemble de fils conducteurs formant un grillage, etc. Le plan 38 de masse peut prendre plusieurs formes, par exemple un cercle, un polygone (régulier ou non), etc. Le plan 38 de masse s'étend sous l'ensemble du système 22 antennaire, c'est-à-dire que la projection du système 22 antennaire sur le milieu 28 conducteur selon l'axe Oz est comprise dans la surface occupée par le plan 38 de masse. En pratique, dans le mode de réalisation représenté, le plan 38 de masse a une longueur au minimum strictement supérieure à la longueur L du parasite 30 et une largeur au minimum d'au moins quelques dizaines de centimètres supérieure à la largeur du parasite 30. Les hauteurs h et H défini précédemment restent exprimées à partir du milieu 28 conducteur.

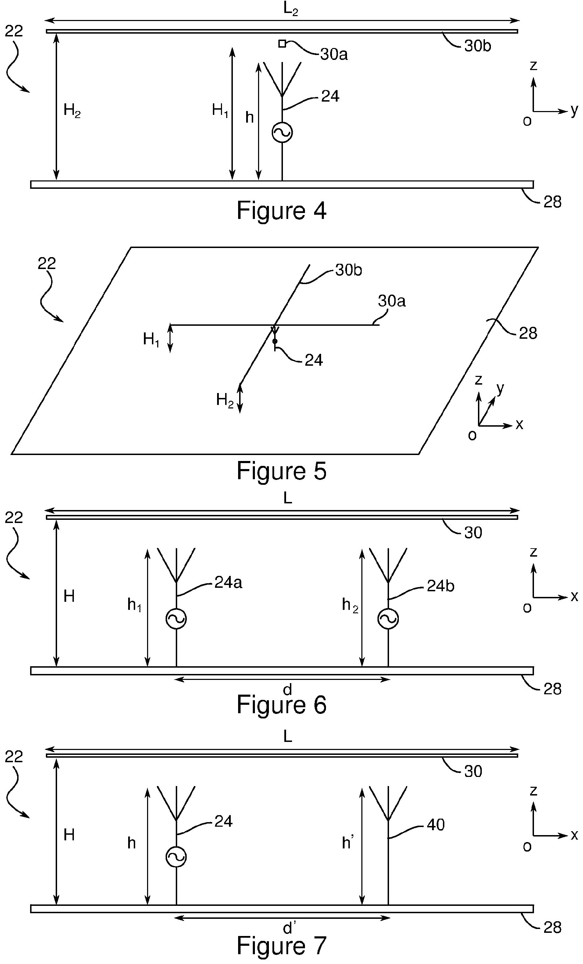

La figure 4 représente schématiquement selon un plan yOz un système 22 antennaire selon un troisième mode de réalisation de l'invention. La figure 5 représente schématiquement en perspective ce système 22 antennaire selon le troisième mode de réalisation de l'invention.

Dans ce troisième mode de réalisation de l'invention, le système 22 antennaire comprend un premier parasite 30a filaire, de longueur L1, identique au parasite filaire du premier mode de réalisation, ainsi qu'un deuxième parasite 30b filaire, de longueur L2, orthogonal au premier parasite 30a filaire et situé au-dessus de celui-ci. Le deuxième parasite 30b filaire permet de réduire les rayonnements ionosphériques de l'antenne 24 dans un autre plan que celui du premier parasite 30a. En particulier, le deuxième parasite 30b filaire est parallèle à l'axe Oy et réduit ainsi les rayonnements ionosphériques dans le plan xOz. Les parasites 30a, 30b sont de longueurs L1 et L2 de préférence identiques, mais peuvent être de longueurs L1 et L2 différentes dans d'autres modes de réalisation. Les hauteurs H1 et H2 des parasites 30a, 30b peuvent être différentes ou identiques (auquel cas les parasites 30a, 30b sont reliés électriquement). Les deux parasites 30a, 30b sont centrés sur l'antenne. Le deuxième parasite 30b permet en outre d'améliorer le gain au niveau du sol au dessus du milieu 28 conducteur et d'obtenir une omnidirectionnalité du rayonnement dans le plan XoY dit plan azimutal.

Selon d'autres modes de réalisation du système antennaire, les deux parasites peuvent former un angle quelconque différent de 90°, ou être décentrés de l'antenne. Selon d'autres modes de réalisation de l'invention, les deux parasites peuvent être reliés électriquement. Selon d'autres modes de réalisation, le système antennaire peut comprendre plus que deux parasites.

La figure 6 représente schématiquement selon un plan xOz un système 22 antennaire selon un quatrième mode de réalisation de l'invention.

Dans ce quatrième mode de réalisation, le système 22 antennaire comprend deux antennes reliées au milieu 28 conducteur, une première antenne 24a de hauteur h1 et une deuxième antenne 24b de hauteur h2, séparées par une distance d. Le système antennaire comprend en outre un unique parasite 30, agencé de façon à rayonner grâce au rayonnement des deux antennes 24a, 24b.

Le système 22 antennaire selon ce quatrième mode de réalisation permet modifier le rayonnement des antennes 24a, 24b grâce au parasite 30 et à la théorie des réseaux appliqué aux deux antennes 24a, 24b.

La figure 7 représente schématiquement selon un plan xOz un système 22 antennaire selon un cinquième mode de réalisation de l'invention.

Dans ce cinquième mode de réalisation, le système 22 antennaire comprend un parasite 30, une antenne 24, et un élément parasitaire 40 vertical, de hauteur h' et agencé à une distance d' de l'antenne 24 de façon à rayonner grâce au courant induit par ledit rayonnement de l'antenne 24. L'élément parasitaire 40 est en outre relié au milieu 28 conducteur, ou au plan de masse dans les modes de réalisation où un plan de masse est présent.

De la même façon que le parasite 30, l'élément parasitaire 40 vertical rayonne du fait de sa présence au voisinage de l'antenne 24, par couplage électromagnétique, et permet d'augmenter la directivité et/ou la bande passante du système 22 antennaire. L'élément parasitaire 40 vertical peut en outre prendre une forme similaire à l'antenne 24, sans toutefois être alimenté.

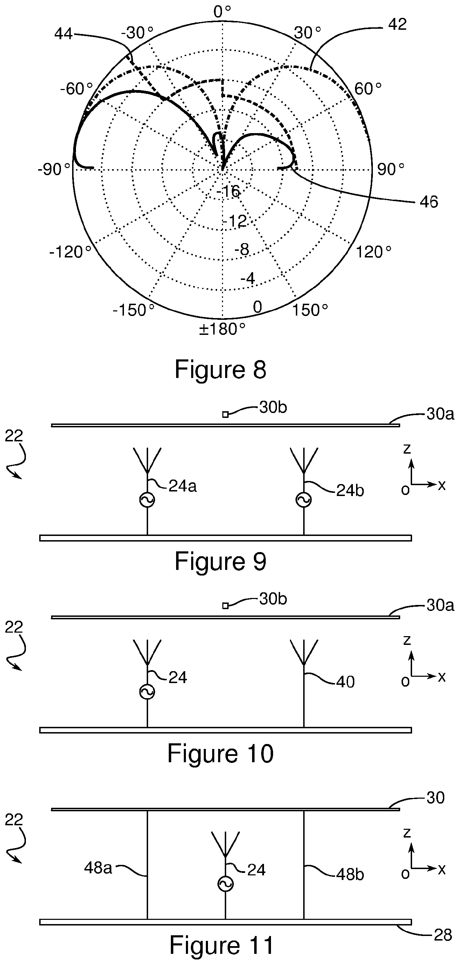

La figure 8 représente schématiquement un diagramme de rayonnement selon le plan xOz d'un système antennaire selon ce cinquième mode de réalisation.

Le diagramme comprend trois courbes : une première courbe 42 représente le rayonnement d'une antenne DAR classique, une deuxième courbe 44 représente un gabarit délimitant une zone de rayonnement dans laquelle on ne souhaite pas que le système antennaire rayonne, et une troisième courbe 46 représentant le rayonnement du système antennaire selon le cinquième mode de réalisation de l'invention.

Le gabarit indique que l'amplitude du champ rayonné ne doit pas dépasser -10 dB entre les angles 0° et 90° (du côté de l'élément parasitaire vertical), et -8 dB entre - 45° et 0°. Le système antennaire selon le cinquième mode de réalisation permet de respecter ce gabarit.

La figure 9 représente schématiquement selon un plan xOz un système antennaire selon un sixième mode de réalisation de l'invention.

Ce sixième mode de réalisation est une combinaison des troisième et quatrième modes de réalisation, le système 22 antennaire comprenant deux parasites 30a, 30b et deux antennes 24a, 24b.

La figure 10 représente schématiquement selon un plan xOz un système antennaire selon un septième mode de réalisation de l'invention.

Ce septième mode de réalisation est une combinaison des troisième et cinquième modes de réalisation, le système 22 antennaire comprenant deux parasites 30a, 30b, une antenne 24 et un élément parasitaire 40 vertical.

La figure 11 représente schématiquement selon un plan xOz un système antennaire selon un huitième mode de réalisation de l'invention.

Dans ce huitième mode de réalisation, le système 22 antennaire comprend une antenne 24 et un parasite 30, le parasite 30 étant relié électriquement au milieu 28 continu par des connecteurs verticaux, ici deux connecteurs 48a et 48b verticaux, disposés de part et d'autre de l'antenne de façon symétrique. Les connecteurs 48a, 48b sont reliés au niveau du parasite 30 à des positions dans lesquelles la distribution de courant est maximale sur le parasite 30. Par exemple, pour un parasite d'une longueur de λ₀, les connecteurs 48a, 48b sont reliés à des positions correspondant à une distance de λ₀/4 et 3X₀/4 en partant d'une des extrémités du parasite.

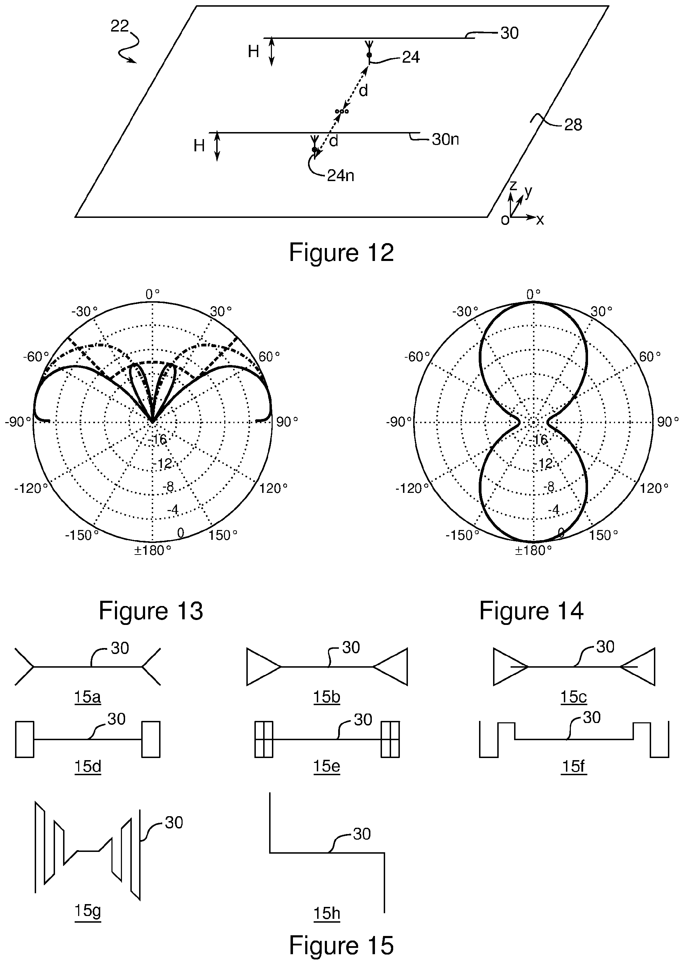

La figure 12 représente schématiquement en perspective un système 22 antennaire selon un neuvième mode de réalisation de l'invention.

Dans ce neuvième mode de réalisation de l'invention, le système 22 antennaire est une mise en réseau de plusieurs systèmes antennaires selon les modes de réalisation décrits précédemment, par exemple selon le premier mode de réalisation. Le système 22 antennaire comprend ainsi n antennes 24-24n reliées au milieu 28 conducteur et n parasites 30-30n, chaque parasite étant agencé au voisinage d'une antenne. Les antennes sont espacées l'une de l'autre d'une distance d.

Les figures 13 et 14 représentent des diagrammes de rayonnement d'un système antennaire selon le neuvième mode de réalisation de l'invention comprenant trois antennes de type fouet d'une hauteur h = 0.06λ₀m, associés à trois parasites de longueur L = 1.6λ₀ m et placés à une hauteur H = 0.066λ₀ m. Les antennes sont espacées d'une distance d = 0.35 λ₀. De façon à obtenir un diagramme bidirectionnel, comme visible sur la figure 14 représentant le rayonnement dans le plan xOy, l'amplitude de l'antenne située entre les deux autres antennes est égale à 0,6 fois l'amplitude de celles-ci. Les rayonnements dans le plan xOz, visibles sur la figure 13, sont similaires au rayonnement décrit en référence avec la figure 2.

La figure 15 regroupe un ensemble de figures 15a, 15b, 15c, 15d, 15e, 15f, 15g et 15h, représentant selon le plan xOy différents modes de réalisation de parasites 30 filaires pouvant être utilisés dans un système antennaire selon l'invention. Ces parasites comprennent, à chacune de leurs extrémités, une portion repliée permettant notamment de réduire l'encombrement du parasite selon sa direction principale par rapport à un parasite filaire rectiligne, tout en conservant une longueur électrique équivalente à ce parasite filaire rectiligne. La longueur électrique d'un parasite est la longueur du chemin de courant le plus long sur le parasite.

Les parasites peuvent comprendre des portions repliés sous différentes formes tel que des méandres, des bobinages et des formes géométriques diverses. L'encombrement résultant peut atteindre 65% de l'encombrement d'un parasite rectiligne équivalent, tout en conservant une longueur électrique équivalente.

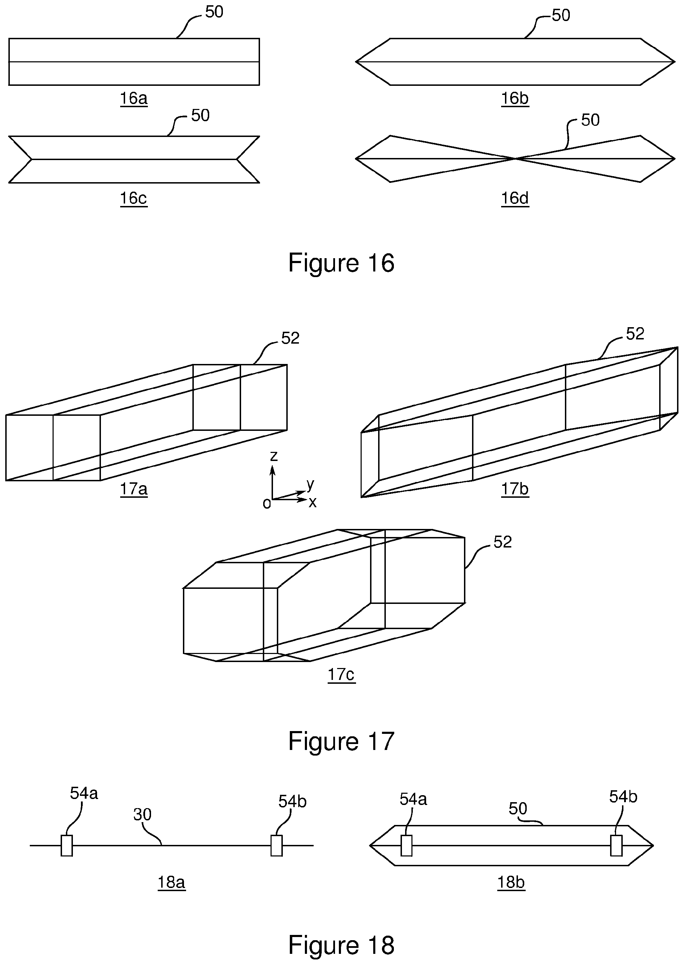

La figure 16 regroupe un ensemble de figures 16a, 16b, 16c et 16d représentant selon un plan x0y différents modes de réalisation d'une pluralité de parasites filaires formant un parasite dit parasite 50 surfacique. Les parasites surfaciques permettent d'augmenter la largeur de bande de l'antenne. De la même façon, comme représenté en perspective sur la figure 17 regroupant un ensemble de figures 17a, 17b et 17c, une pluralité de parasites filaires peuvent être reliés de façon à former un parasite dit parasite 52 volumique, pour augmenter la largeur de bande de l'antenne. Les formes des parasites surfaciques ou volumiques peuvent varier de façon à diminuer le rapport largeur/longueur de ces parasites pour augmenter davantage la bande passante.

La figure 18 regroupe les figures 18a et 18b, représentant selon un plan x0y deux modes de réalisation de parasite 30 filaire ou de parasite 50 surfacique comprenant au moins un élément localisé, ici deux éléments localisés 54a et 54b, qui peuvent être des éléments résistifs, capacitifs (condensateur) ou inductifs (bobine). Ces éléments localisés sont couramment appelés « *load* » en anglais. Les éléments localisés 54a, 54b peuvent permettre de reproduire la résonance RLC du parasite 30 avec une longueur physique (ou encombrement) de parasite 30 réduite mais une longueur électrique équivalente.

Les éléments localisés 54a, 54b peuvent aussi permettre de créer, sur les parasites 30, 50, des circuits ouverts (ou haute impédance) à certaines fréquences de fonctionnement et fermés à d'autres fréquences de fonctionnement, permettant ainsi une variation de la résonance des parasites selon la fréquence de fonctionnement. Ces éléments localisés 54a, 54b créent ainsi de multiples résonances à l'aide de pièges de courant.

Selon les modes de réalisation, les éléments localisés peuvent aussi être utilisés sur les éléments parasitaires verticaux et/ou sur les connecteurs des parasites.

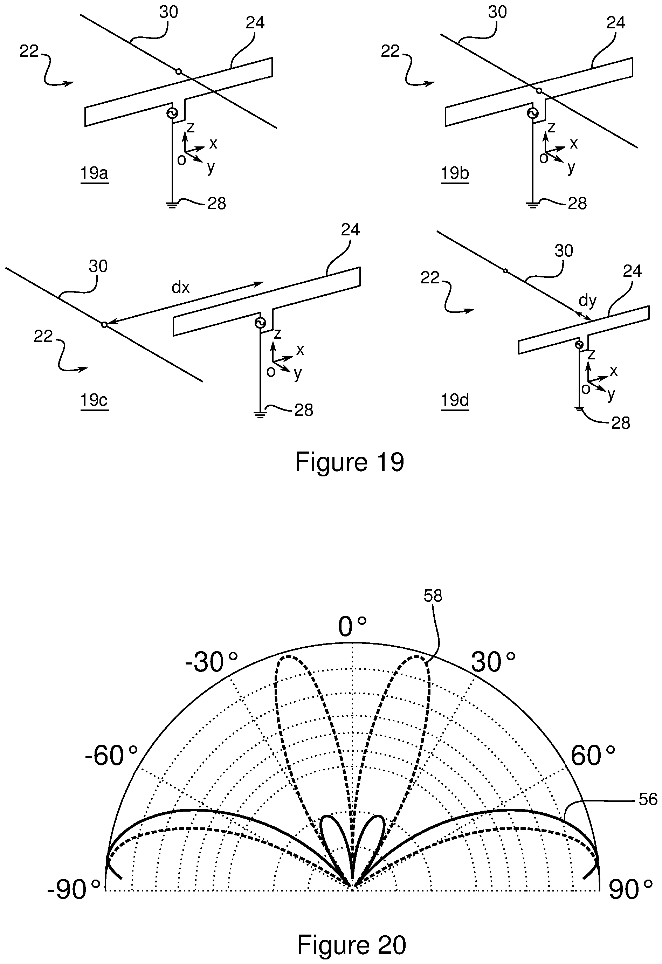

La figure 19 regroupe les figures 19a, 19b, 19c et 19d représentant en perspective différents modes de réalisation d'un système 22 antennaire comprenant une antenne 24 de type antenne DAR, reliée au milieu 28 conducteur (ou à un plan de masse s'il est présent). L'antenne DAR est formée d'une boucle s'étendant dans le plan xOz. Un parasite 30 s'étend selon l'axe Oy, donc orthogonalement à l'antenne DAR, et au voisinage de cette antenne DAR. Les différents modes de réalisation montrent différentes positions où peut se trouver le parasite.

Dans le mode de réalisation de la figure 19a, le parasite 30 est situé au-dessus de l'antenne DAR.

Dans le mode de réalisation de la figure 19b, le parasite 30 est situé en dessous de la hauteur maximale de l'antenne DAR, c'est-à-dire au milieu de la boucle (sans être connectée à celle-ci.

Dans le mode de réalisation de la figure 19c, le parasite 30 est décalé d'une distance dₓ de l'antenne DAR selon l'axe Ox. La distance dₓ est au maximum égale à λ₀/2.

Dans le mode de réalisation de la figure 19d, le parasite 30 est décalé d'une distance d_{y} de l'antenne DAR selon l'axe Oy. La distance d_{y} est au maximum égale à λ₀/2.

Selon d'autres modes de réalisation de l'invention, le parasite peut être décalé par combinaison dans le plan xOy par combinaison de distances dₓ et d_{y}.

La figure 20 représente un diagramme de rayonnement selon le plan xOz d'un système antennaire selon le mode de réalisation représenté en figure 19a, pour deux longueurs de parasite filaires.

La première courbe 56 représente le rayonnement du système antennaire avec un parasite d'une longueur L = λ₀. Le rayonnement ionosphérique (entre -45° et 45°) est faible avec cette longueur de parasite.

La deuxième courbe 58 représente le rayonnement du système antennaire avec un parasite d'une longueur L = 2λ₀. Le rayonnement ionosphérique (angles entre -45° et 45°) est fort avec cette longueur de parasite, mais la directivité est plus importante au niveau des ondes de surfaces (angles proches de -90° ou de 90°).

Le réglage de la longueur du parasite entre ces deux longueurs permet donc d'obtenir des résultats intermédiaires selon l'application recherchée pour le système antennaire, privilégiant soit la réduction des rayonnements ionosphériques, soit la directivité au niveau des ondes de surface.

L'invention ne se limite pas aux seuls modes de réalisation décrits. En particulier, les caractéristiques des modes de réalisation décrits peuvent être combinées de façon à former d'autres modes de réalisation : le nombre et la disposition des antennes, des parasites et des éléments parasitaires peuvent varier de façon à obtenir le système antennaire le plus adapté au fonctionnement souhaité.

## Revendications

1. Système antennaire à ondes de surface kilométriques, hectométriques ou décamétriques, comprenant :
- au moins une antenne (24, 24a, 24b, 24n) adaptée à émettre et/ou à recevoir un rayonnement dans une longueur d'onde de fonctionnement λ₀, à polarisation verticale ou elliptique et émettant un rayonnement, ladite au moins une antenne (24, 24a, 24b, 24n) étant reliée à un milieu (28) conducteur présentant une surface sensiblement horizontale ;
- au moins un parasite (30, 30a, 30b, 30n) filaire électriquement isolé de chaque antenne de ladite au moins une antenne (24, 24a, 24b, 24n) et agencé au voisinage d'au moins une antenne de ladite au moins une antenne (24, 24a, 24b, 24n) de façon à pouvoir rayonner grâce au courant induit par ledit rayonnement de cette au moins une antenne (24, 24a, 24b, 24n), ledit au moins un parasite filaire s'étendant selon une direction formant un angle compris entre -10° et 10° avec la surface du milieu (28) conducteur ;
le système antennaire étant caractérisé en ce :
- ladite au moins une antenne (24, 24a, 24b, 24n) est électriquement courte dans le plan vertical, telle qu'elle présente un encombrement vertical inférieur à un quart de la longueur d'onde de fonctionnement,
- ledit au moins un parasite filaire (30, 30a, 30b, 30n) a une longueur électrique sélectionnée de sorte que le rayonnement de ladite au moins une antenne (24, 24a, 24b, 24n) et le rayonnement dudit au moins un parasite filaire (30, 30a, 30b, 30n) soient en opposition de phase et quasiment de même amplitude.

2. Système antennaire selon la revendication 1, **caractérisé en ce qu'**il comprend au moins deux parasites (30a, 30b) filaires s'étendant dans des directions principales différentes l'une de l'autre.

3. Système antennaire selon la revendication 2, **caractérisé en ce qu'**au moins deux parasites (30a, 30b) filaires sont électriquement connectés.

4. Système antennaire selon l'une des revendications 1 à 3, **caractérisé en ce qu'**il comprend au moins un élément parasitaire (40) vertical s'étendant dans une direction sensiblement perpendiculaire à la surface du milieu (28) conducteur, relié au milieu (28) conducteur, et agencé au voisinage d'au moins une antenne de ladite au moins une antenne (24, 24a, 24b, 24n) de façon à pouvoir rayonner grâce au courant induit par ledit rayonnement de cette au moins une antenne (24, 24a, 24b, 24n).

5. Système antennaire selon la revendication 4, **caractérisé en ce qu'**au moins un élément parasitaire (40) vertical comprend au moins un élément localisé (54a, 54b).

6. Système antennaire selon l'une des revendications 1 à 5, **caractérisé en ce que** le milieu (28) conducteur comprend un plan (38) de masse, auquel est reliée chaque antenne (24, 24a, 24b, 24n).

7. Système antennaire selon la revendication 6, **caractérisé en ce qu'**au moins un parasite (30, 30a, 30b, 30n) filaire est connecté au plan (38) de masse.

8. Système antennaire selon l'une des revendications 1 à 7, **caractérisé en ce qu'**au moins un parasite (30, 30a, 30b, 30n) est relié au milieu (28) conducteur.

9. Système antennaire selon l'une des revendications 1 à 8, **caractérisé en ce qu'**au moins un parasite (30, 30a, 30b, 30n) comprend au moins une portion repliée.

10. Système antennaire selon l'une des revendications 1 à 9, **caractérisé en ce qu'**au moins un parasite (30, 30a, 30b, 30n) comprend au moins un élément localisé (54a, 54b).

11. Système antennaire selon l'une des revendications 1 à 10, **caractérisé en ce qu'**il comprend une pluralité de parasites filaires reliés de sorte à former un parasite surfacique (50) ou un parasite volumique (52).

## Patentansprüche

1. Antennensystem für Kilometer-, Hektometer- oder Dekameteroberflächenwellen, umfassend:
- mindestens eine Antenne (24, 24a, 24b, 24n), die angepasst ist, um eine Strahlung in einer Betriebswellenlänge λ₀ mit vertikaler oder elliptischer Polarisierung zu emittieren und/oder zu empfangen und eine Strahlung zu emittieren, wobei die mindestens eine Antenne (24, 24a, 24b, 24n) mit einem leitenden Medium (28) verbunden ist, das eine im Wesentlichen horizontale Oberfläche aufweist;
- mindestens einen drahtgebundenen Parasiten (30, 30a, 30b, 30n), der von jeder Antenne der mindestens einen Antenne (24, 24a, 24b, 24n) elektrisch isoliert ist und in der Nähe mindestens einer Antenne der mindestens einen Antenne (24, 24a, 24b, 24n) angeordnet ist, um durch den Strom, der durch die Strahlung dieser mindestens einen Antenne (24, 24a, 24b, 24n) induziert wird, abstrahlen zu können, wobei sich der mindestens eine drahtgebundene Parasit in eine Richtung erstreckt, die einen Winkel zwischen -10° und 10° mit der Oberfläche des leitenden Mediums (28) bildet;
wobei das Antennensystem **dadurch gekennzeichnet ist, dass**:
- die mindestens eine Antenne (24, 24a, 24b, 24n) in der vertikalen Ebene elektrisch kurz ist, sodass sie einen vertikalen Platzbedarf von weniger als einem Viertel der Betriebswellenlänge aufweist,
- der mindestens eine drahtgebundene Parasit (30, 30a, 30b, 30n) eine elektrische Länge aufweist, die gewählt ist, sodass die Strahlung der mindestens einen Antenne (24, 24a, 24b, 24n) und die Strahlung des mindestens einen drahtgebundenen Parasiten (30, 30a, 30b, 30n) gegenphasig sind und im Wesentlichen die gleiche Amplitude aufweisen.

2. Antennensystem nach Anspruch 1, **dadurch gekennzeichnet, dass** es mindestens zwei drahtgebundene Parasiten (30a, 30b) umfasst, die sich in voneinander verschiedene Hauptrichtungen erstrecken.

3. Antennensystem nach Anspruch 2, **dadurch gekennzeichnet, dass** mindestens zwei drahtgebundene Parasiten (30a, 30b) elektrisch verbunden sind.

4. Antennensystem nach einem der Ansprüche 1 bis 3, **dadurch gekennzeichnet, dass** es mindestens ein vertikales parasitäres Element (40) umfasst, das sich in einer Richtung im Wesentlichen senkrecht zu der Oberfläche des leitenden Mediums (28) erstreckt, mit dem leitenden Medium (28) verbunden ist und in der Nähe mindestens einer Antenne der mindestens einen Antenne (24, 24a, 24b, 24n) angeordnet ist, sodass es dank des durch die Strahlung dieser mindestens einen Antenne (24, 24a, 24b, 24n) induzierten Stroms abstrahlen kann.

5. Antennensystem nach Anspruch 4, **dadurch gekennzeichnet, dass** mindestens ein vertikales parasitäres Element (40) mindestens ein lokalisiertes Element (54a, 54b) umfasst.

6. Antennensystem nach einem der Ansprüche 1 bis 5, **dadurch gekennzeichnet, dass** das leitende Medium (28) eine Masseebene (38) umfasst, mit der jede Antenne (24, 24a, 24b, 24n) verbunden ist.

7. Antennensystem nach Anspruch 6, **dadurch gekennzeichnet, dass** mindestens ein drahtgebundener Parasit (30, 30a, 30b, 30n) mit der Masseebene (38) verbunden ist.

8. Antennensystem nach einem der Ansprüche 1 bis 7, **dadurch gekennzeichnet, dass** mindestens ein Parasit (30, 30a, 30b, 30n) mit dem leitenden Medium (28) verbunden ist.

9. Antennensystem nach einem der Ansprüche 1 bis 8, **dadurch gekennzeichnet, dass** mindestens ein Parasit (30, 30a, 30b, 30n) mindestens einen gefalteten Abschnitt umfasst.

10. Antennensystem nach einem der Ansprüche 1 bis 9, **dadurch gekennzeichnet, dass** mindestens ein Parasit (30, 30a, 30b, 30n) mindestens ein lokalisiertes Element (54a, 54b) umfasst.

11. Antennensystem nach einem der Ansprüche 1 bis 10, **dadurch gekennzeichnet, dass** es eine Vielzahl von drahtgebundenen Parasiten umfasst, die verbunden sind, um einen Flächenparasiten (50) oder einen Volumenparasiten (52) zu bilden.

## Claims

1. An antenna system with kilometric, hectometric or decametric surface waves, comprising:
- at least one antenna (24, 24a, 24b, 24n) adapted to emit and/or receive a radiation in an operating wavelength λ₀, with vertical or elliptical polarization and emitting a radiation, said at least one antenna (24, 24a, 24b, 24n) being connected to a conductive medium (28) having a substantially horizontal surface;
- at least one wire parasite (30, 30a, 30b, 30n) electrically isolated from each antenna of said at least one antenna (24, 24a, 24b, 24n) and arranged in the vicinity of at least one antenna of said at least one antenna (24, 24a, 24b, 24n) so as to be able to radiate thanks to the current induced by said radiation of this at least one antenna (24, 24a, 24b, 24n), said at least one wire parasite extending in one direction forming an angle comprised between -10° and 10° with the surface of the conductive medium (28);
the antenna system being **characterized in that**:
- said at least one antenna (24, 24a, 24b, 24n) is electrically short in the vertical plane, such that it has a vertical footprint less than a quarter of the operating wavelength,
- said at least one wire parasite (30, 30a, 30b, 30n) has an electrical length selected so that the radiation of said at least one antenna (24, 24a, 24b, 24n) and the radiation of said at least one wire parasite (30, 30a, 30b, 30n) are in phase opposition and almost of the same amplitude.

2. The antenna system according to claim 1, **characterized in that** it comprises at least two wire parasites (30a, 30b) extending in main directions different from each other.

3. The antenna system according to claim 2, **characterized in that** at least two wire parasites (30a, 30b) are electrically connected.

4. The antenna system according to any of claims 1 to 3, **characterized in that** it comprises at least one vertical parasitic element (40) extending in a direction substantially perpendicular to the surface of the conductive medium (28), connected to the conductive medium (28), and arranged in the vicinity of at least one antenna of said at least one antenna (24, 24a, 24b, 24n) so as to be able to radiate thanks to the current induced by said radiation of this at least one antenna ( 24, 24a, 24b, 24n).

5. The antenna system according to claim 4, **characterized in that** at least one vertical parasitic element (40) comprises at least one localized element (54a, 54b).

6. The antenna system according to any of claims 1 to 5, **characterized in that** the conductive medium (28) comprises a ground plane (38), to which each antenna (24, 24a, 24b, 24n) is connected.

7. The antenna system according to claim 6, **characterized in that** at least one wire parasite (30, 30a, 30b, 30n) is connected to the ground plane (38).

8. The antenna system according to any of claims 1 to 7, **characterized in that** at least one parasite (30, 30a, 30b, 30n) is connected to the conductive medium (28).

9. The antenna system according to any of claims 1 to 8, **characterized in that** at least one parasite (30, 30a, 30b, 30n) comprises at least one folded portion.

10. The antenna system according to any of claims 1 to 9, **characterized in that** at least one parasite (30, 30a, 30b, 30n) comprises at least one localized element (54a, 54b).

11. The antenna system according to any of claims 1 to 10, **characterized in that** it comprises a plurality of wire parasites connected so as to form a surface parasite (50) or a volume parasite (52).
